# EUROPÄISCHE PATENTSCHRIFT

(11) **EP 1 689 224 B1**
(45) Veröffentlichungstag und Bekanntmachung des Hinweises auf die Patenterteilung: **07.04.2010**
(21) Anmeldenummer: 04818125.9
(22) Anmeldetag: 05.11.2004
(51) Int. Cl.: A01K 1/00

(54) **VERFAHREN UND VORRICHTUNG ZUR BEREITSTELLUNG VON INFORMATIONEN ÜBER DIE MELKPLATZBELEGUNG EINES MELKSYSTEMS**
METHOD AND DEVICE FOR PROVIDING INFORMATION ON THE OCCUPANCY OF MILKING STATIONS OF A MILKING SYSTEM
PROCEDE ET DISPOSITIF POUR METTRE A DISPOSITION DES INFORMATIONS RELATIVES A L'OCCUPATION D'UN POSTE DE TRAITE D'UN SYSTEME DE TRAITE

(30) Priorität: 07.11.2003 DE 10351911
(43) Veröffentlichungstag der Anmeldung: 16.08.2006
(73) Patentinhaber: GEA WestfaliaSurge GmbH, 59199 Bönen (DE)
(72) Erfinder: KAEVER, Peter, 59302 Oelde (DE); FRANCKE, Heinz, 59302 Oelde (DE); POHLKAMP, Manfred, 59302 Oelde (DE)
(74) Vertreter: Neumann, Ditmar
(86) Internationale Anmeldenummer: PCT/EP2004/012534
(87) Internationale Veröffentlichungsnummer: WO 2005/043988

(56) Entgegenhaltungen:
- EP-A- 0 499 428
- EP-A- 0 898 883
- EP-A- 1 212 937
- EP-A- 1 340 457
- NL-A- 8 903 163

## Beschreibung

Der Gegenstand der Erfindung bezieht sich auf ein Verfahren sowie auf eine Vorrichtung zur Bereitstellung von Informationen über Melkplatzbelegung eines Melksystems.

Obwohl im folgenden die Erfindung auf die Verwendung eines Melksystems zum Melken von Kühen beschrieben wird, so wird darauf hingewiesen, dass das erfindungsgemäße Verfahren bzw. die Vorrichtung zur Bereitstellung von Informationen über Melkplatzbelegung eines Melksystems auch für Melksysteme zum Melken von anderen Milch abgebenden Tieren, wie beispielsweise Schafen, Ziegen, Eseln, Dromedaren, Yacks, Elchen, Büffeln, Pferden u. dgl. geeignet ist.

Im Zuge der Automatisierung des Melkens sowie der Überwachung der Tiere bezüglich ihrer Milchleistung und Gesundheit ist bekannt, dass die Tiere mit einer Tiererkennungseinheit versehen sind. Die Tiererkennungseinheit kann verschiedene Informationen über das betreffende Tier enthalten.

Durch die EP 0 499 428 A1 ist beispielsweise ein System mit einem Eingang, der einen Rahmen mit einem Identifizierungsfühler aufweist, bekannt. Der Identifizierungsfühler weist eine Sendeantenne und eine Empfängerantenne zur Tiererkennung auf. Die Tieridentifizierungseinheit (z. B. Label) umfasst eine elektronische Schaltung, die durch eine abfragende, elektrische Hochfrequenzstrahlung (RF-Frequenz) aus der Sendeantenne aktiviert wird und ein Identifizierungssignal zurücksendet.

Nach der Durchführung einer Identifikation wird aus der Reihenfolge der Erkennung der Tiere eine Zuordnung zu den Melkplätzen hergestellt.

Problematisch stellt sich eine Zuordnung einzelner Tiere zu den Melkplätzen dann dar, wenn ein Tier nicht oder das Signal nicht mit der erforderlichen Qualität empfangen werden konnte, sei es, dass das Tieridentifizierungsmittel beschädigt oder abhanden gekommen ist.

Dieses Problem ist bereits erkannt worden. Durch die EP 0 898 883 A1 ist ein Verfahren zur Korrektur der Zuordnung von Tieren zu einzelnen Melkplätzen bekannt. Hierzu wird vorgeschlagen, dass basierend auf historischen bzw. in der Vergangenheit liegenden Milchmessungen von jeweiligen Kühen die erwartete Milchmenge bestimmt wird.

Die tatsächlich ermolkene Milchmenge wird mit der erwarteten Milchmenge verglichen. Stimmen die Milchmengen an den jeweiligen Melkplätzen nicht überein, so wird eine Korrektur durch Verschieben von zumindest einer oder mehreren der erwarteten Milchmengen relativ zu den historischen Milchmengen zumindest für eine Melkplatznummer durchgeführt. Kann einer historischen Milchmenge die tatsächliche Milchmenge zugeordnet werden, so liegt eine Kuhidentifizierung vor.

Problematisch bei einem solchen Verfahren ist, dass eine Korrektur der Zuordnung erst dann erfolgt, wenn der Melkvorgang tatsächlich durchgeführt und abgeschlossen wurde. Insbesondere bei Tieren, deren Gemelk separiert werden muss, geschieht die Korrektur zu einem Zeitpunkt, der für eine Separation des Gemelks zu spät ist. Darüber hinaus besteht das Problem, dass die prognostizierte Milchmenge relativ genau bestimmt werden muss. Befinden sich in einer Tierherde mehrere Tiere, die vergleichbare Milchmengen abgeben, so kann eine eindeutige Identifikation bzw. Zuordnung von Tieren zu Melkplätzen nur unzureichend erfolgen, so dass eine Restunsicherheit bestehen bleibt.

Die Zuordnungssicherheit von Tieren zu Melkplätzen kann auf einem anderen Weg dadurch erhöht werden, dass eine Identifikation eines Tieres am Melkplatz selbst erfolgt. Dies ist jedoch mit einem erhöhten Installationsaufwand und höheren Kosten verbunden.

Hiervon ausgehend liegt der vorliegenden Erfindung die Zielsetzung zugrunde, ein Verfahren zur Bereitstellung von Informationen über eine Melkplatzbelegung anzugeben, mit welchem eine erhöhte Zuordnungssicherheit von Tieren zu Melkplätzen erreicht wird. Ein weiteres Ziel der Erfindung ist es, den technischen und somit auch den wirtschaftlichen Aufwand gering zu halten, insbesondere die Möglichkeit zu schaffen, das Verfahren auch bei bestehenden Melksystemen anzuwenden.

Diese und weitere Zielsetzungen werden erfindungsgemäß durch ein Verfahren zur Bereitstellung von Informationen über Melkplatzbelegung eines Melksystems mit den Merkmalen des Anspruchs 1 erreicht. Vorteilhafte Weiterbildungen und Ausgestaltungen des erfindungsgemäßen Verfahrens sind Gegenstand der abhängigen Ansprüche.

Zur Bereitstellung von Informationen über eine Melkplatzbelegung eines Melksystems wird nach dem erfindungsgemäßen Verfahren vorgeschlagen, dass zu jedem Tier, welches das Melksystem aufsucht, jeweils eine tierindividuelle Informationseinheit gebildet wird. Zur Bildung dieser Informationseinheiten werden die Tiere aufeinander folgend sensorisch erfasst und zusätzlichen Identifikationsvorgängen unterzogen. Die sensorische Erfassung und die Identifikationsvorgänge sind dabei so aufeinander abgestimmt, dass eine Zuordnung von den jeweiligen sensorisch erfassten Daten und den durch die Identifikationsvorgänge ermittelten Daten einer Informationseinheit möglich ist. Die sensorischen Daten und die aus den Identifikationsvorgängen ermittelten Daten bilden jeweils eine Informationseinheit, die einem bestimmten Tier zugeordnet ist. Die Informationseinheiten der Tiere, die den einzelnen Tieren zugeordnet sind, werden an den jeweiligen Melkplätzen zur Verfügung gestellt, an denen sich die zu den Informationseinheiten zugehörigen Tiere befinden. Durch diese Verfahrensführung werden Informationen über die Platzbelegung der einzelnen Melkplätze bereitgestellt.

Zur Verarbeitung der Daten ist eine Prozesssteuerung vorgesehen. Diese kann Teil eines Herdenmanagementsystems sein.

Die sensorisch erfassten Daten können die Ordinalzahlen der Reihenfolge, in der die einzelnen Tiere die Melkplätze belegen, enthalten. So belegt beispielsweise das erste Tier einen ersten Melkplatz, das zweite Tier einen zweiten Melkplatz, ein drittes Tier einen dritten Melkplatz usw.. Diesen sensorisch erfassten Daten werden die während eines Identifikationsvorgangs ermittelten Daten zugeordnet Hinzu werden während des Identifikationsvorgangs die tierindividuellen Informationen aus Tieridentifizierungsmitteln herausgelesen. War der Identifikationsvorgang erfolgreich, so enthält beispielsweise die Informationseinheit eines ersten Tieres die Ordinalzahl sowie die zu dem ersten Tier zugehörigen Eins tierindividuellen Informationen, die durch den Identifikationsvorgang ermittelt worden sind. Hierbei belegt das erste Tier den ersten Melkplatz. Diesem Melkplatz wird die so gebildete Informationseinheit bereitgestellt. Werden während eines Identifikationsvorgangs keine Daten zu einem Tier ermittelt, so wird dies auch in der Informationseinheit hinterlegt. Ein erfolgloser Identifikationsvorgang kann dann beispielsweise eintreten, wenn das Tier keine Tieridentifikationsmittel aufweist oder dieses defekt ist oder kein ausreichendes Signal empfangen wurde. Der Informationseinheit können dann keine konkreten Tierinformationen zugeordnet werden. Eine Zuordnung zum Melkplatz liegt vor.

Durch diese erfindungsgemäße Verfahrensführung können zwei Gruppen von Informationseinheiten bzw. Melkplätzen entstehen: In der einen Gruppe sind die Melkplätze mit vollständigen Informationseinheiten enthalten. Die weitere Gruppe enthält Melkplätze bzw. Informationseinheiten, bei denen sensorische Daten vorliegen, aber keine korrekte Tieridentifikation erfolgte. Die Zuordnung der Informationseinheiten zu den einzelnen Melkplätzen erfolgt dennoch zuverlässig, da es zu keiner "Verschiebung" von Daten kommt.

Erfolgt ein Abgleich zwischen den Daten eines Herdenmanagementsystems und den Informationseinheiten, so kann daraus die Menge der Tiere ermittelt werden, zu denen keine sensorischen Daten vorliegen. Dies sind Tiere, die nicht erkannt worden sind. Das Herdenmanagementsystem kann zu den nicht erkannten Tieren die tierindividuellen Daten bereitstellen. Die nicht erkannten Tiere können im Herdenmanagementsystem oder unter dessen Zuhilfenahme angezeigt werden. Vorzugsweise werden im Melkstand und/oder am Melkplatz die Informationseinheiten angezeigt, bei denen keine korrekte Tieridentifikation erfolgt. Zur Vereinfachung der Handhabung wird vorzugsweise am Melkplatz ein Signal, insbesondere ein Warnsignal und/oder eine Aufforderung an die Bedienperson ausgegeben, das sich am Melkplatz befindende Tier zu identifizieren. Dies Vorgehensweise eröffnet auch die Möglichkeit für eine Bedienperson zu überprüfen, ob das Identifikationsmittel beschädigt und/oder abhanden gekommen ist. Gegebenenfalls kann am Melkplatz der Austausch des Identifikationsmittels erfolgen.

In einer bevorzugten Weiterbildung wird vorgeschlagen, dass die sensorische Erfassung der Tiere im wesentlichen vor der Identifikation erfolgt. Die sensorische Erfassung eines Tieres kann auch ein Signal zur Auslösung eines Identifikationsvorgangs bereitstellen, so dass eine zeitnahe sensorische Erfassung des Tieres sowie ein Identifikationsvorgang des selben Tieres erfolgt. Durch diese bevorzugte Ausführungsform des Verfahrens wird eine sehr gute Synchronisation zwischen der sensorischen Erfassung und der Identifikation eines Tieres erreicht. Auch ein umgekehrtes Vorgehen ist ebenso möglich.

Die sensorische Erfassung kann durch optische Mittel, insbesondere durch wenigstens eine Lichtschranke oder ein Kamerasystem erfolgen. Die Erfassung kann auch dadurch erreicht werden, dass Sensoren, vorzugsweise Näherungssensoren, verwendet werden, die bei Annäherung eines Tieres ein Signal auslösen. Auch die Verwendung akustischer Sensoren oder einer Waage oder dgl. kann vorgesehen sein. Auch eine Erfassung der Temperatur ist möglich.

Es sind auch andere Varianten zur Durchführung der sensorischen Erfassung der Tiere möglich, wobei wesentlich ist, dass jedes Tier einzeln erfasst wird, ohne dass hierbei zwingender Weise gleichzeitig eine Identifikation des Tieres erfolgen muss. Mit der sensorischen Erfassung der Tiere wird festgestellt, ob überhaupt ein Tier vorhanden ist. In der Regel kann die Identität damit nicht festgestellt werden.

Alternativ wird vorgeschlagen, die sensorischen Informationen über eine weitere Tieridentifikation zu verwirklichen.

Die sensorische Erfassung der Tiere erfolgt vorzugsweise in einem Zugang zum Melksystem. Es ist auch möglich, dass mehrere sensorische Erfassungen im Weg zu dem Melksystem durchgeführt werden. Hieraus kann auch die Bewegungsrichtung eines Tieres u. ggf. seine Geschwindigkeit ermittelt werden. Dies ist insbesondere dann von Vorteil, wenn die Gefahr besteht, dass ein bereits sensorisch erfasstes Tier durch eine Rückwärtsbewegung noch einmal erfasst werden könnte. Ist die Bewegungsrichtung des Tieres bekannt, so kann eine Fehlerkorrektur erfolgen bzw. eine Deaktivierung der sensorischen Erfassung erzielt werden, wenn feststeht, dass das Tier sich zurückbewegt.

Zur Durchführung von Identifikationsvorgängen der einzelnen Tiere wird vorgeschlagen, dass die Tiere aufeinander folgend einen Identifikationsbereich passieren. Der Identifikationsvorgang eines Tieres erfolgt derart, dass tierindividuelle Informationen aus Informationsmitteln, die ein Tier aufweist, durch eine Identifikationseinrichtung herausgelesen werden. Die Identifikationsmittel sind Mittel jeglicher Art, die zur Identifikation von Tieren verwendet werden können. Hierbei kann es sich beispielsweise um subkutan angeordnete Identifikationsmittel, Ohrmarken, Hals- und Fußlabel sowie intelligente Label z. B. zur Brunsterkennung oder mit integrierten Sensoren handeln.

Das erfindungsgemäße Verfahren ist auch für automatische und halbautomatische Melksysteme, und vorzugsweise robotergestützte Systeme geeignet. Es ist vorzugsweise für konventionelle Melksysteme vorgesehen. Dazu zählen insbesondere Gruppenmelkstände, wie Side-by-Side-Melkstände, Fischgrätenmelkstände oder auch Melkkatusselle.

Der vorliegenden Erfindung liegt auch die Aufgabe zugrunde, eine Vorrichtung zur Bereitstellung von Informationen über Melkplatzbelegung anzugeben, welche konstruktiv einfach, insbesondere mit einem geringen technischen Aufwand realisiert werden kann.

Diese Aufgabe wird erfindungsgemäß durch eine Vorrichtung mit den Merkmalen des Anspruchs 8 gelöst. Vorteilhafte Weiterbildungen und Ausgestaltungen der Vorrichtungen sind Gegenstand der abhängigen Ansprüche.

Die erfindungsgemäße Vorrichtung zur Bereitstellung von Informationen über Melkplatzbelegung eines Melksystems weist wenigstens eine Identifikationseinrichtung auf, durch die jedes Tier einem Identifikationsvorgang unterzogen wird. Durch den Identifikationsvorgang werden die einzelnen Tiere identifiziert, sofern dies möglich ist. Ist eine Identifikation möglich, so werden die tierindividuellen Daten aus den Tieridentifizierungsmitteln, die das betreffende Tier trägt, herausgelesen. Diese Daten werden in einer Informationseinheit hinterlegt. Konnte das betreffende Tier nicht identifiziert werden, so wird dies gleichfalls als Information in der Informationseinheit hinterlegt.

Jeder Identifikationseinrichtung ist mindestens eine Erfassungseinrichtung zugeordnet. Die Erfassungseinrichtung weist wenigstens einen Sensor auf. Mittels der Erfassungseinrichtung wird jedes Tier erfasst. Hierbei kommt es nicht darauf an, ob das Tier Tieridentifizierungsmittel trägt oder nicht. Ausschlaggebend ist, dass das Tier als solches erfasst wird. Mit der Erfassungseinrichtung und der Identifikationseinrichtung ist eine Informationseinrichtung informationstechnisch verbunden. Durch diese Verbindung liefert die Identifikationseinrichtung Signale an die Informationseinrichtung. Auch die Erfassungseinrichtung liefert ein entsprechendes Signal nach Erfassung eines Tieres an die Informationseinrichtung. Die Informationseinrichtung stellt wenigstens für die Melkplätze Informationseinheiten zur Verfügung. Die Informationseinheiten enthalten Informationen, die aus dem Identifikationsvorgang eines Tieres sowie aus der sensorischen Erfassung des Tieres hervorgingen.

Durch diese erfindungsgemäße Vorrichtung wird eine Möglichkeit geschaffen, die Melkplatzbelegung eines Melksystems darzustellen. Hierbei können die Melkplätze mit entsprechenden Ausgabeeinheiten versehen sein. Die Ausgabeeinheit weist vorzugsweise optische und/oder akustische Mittel auf.

Durch eine optische Ausgabeeinheit kann eine Bedienperson an jedem Melkplatz ablesen, mit welchem Tier der Melkplatz belegt ist. Voraussetzung hierfür ist, dass der Identifikationsvorgang erfolgreich war. Ist dies nicht der Fall, so kann die Person optisch und/oder akustisch darauf aufmerksam gemacht werden, dass der betreffende Melkplatz von einem Tier belegt ist, das nicht eindeutig identifiziert wurde. Die Alarme können auch an ein Herdenmanagementsystem übertragen werden, wo sie gespeichert und aufbereitet werden können.

Die Ausgabe der Informationen der Informationseinrichtung kann auch an einem zentralen Ort erfolgen. Kombinationen sind gleichfalls möglich.

Ist die Bedienperson darauf aufmerksam gemacht worden, dass ein Melkplatz mit einem nicht identifizierten Tier belegt ist, so kann die Bedienperson über das weitere Vorgehen ggf. entscheiden. Sofern der Bedienperson das Tier bekannt ist, oder aus anderen Quellen, beispielsweise einer Ohrmarke, Informationen über das Tier entnehmbar sind, kann die Bedienperson am Melkplatz über eine entsprechende Eingabeeinheit die fehlenden Identifikationsinformationen eingeben.

Es besteht jedoch auch die Möglichkeit, über eine Melkplatzsteuerung die ermolkene Milch eines Tieres, welches nicht identifiziert wurde, vorsorglich abzuscheiden bzw. zu separieren.

Wirkt die Vorrichtung zur Bereitstellung von Informationen mit einem Herdenmanagementsystem zusammen, so kann beispielsweise einer Bedienperson eine Datenbank zur Verfügung gestellt werden, die charakteristische Kennzeichen der einzelnen Tiere enthält. Über entsprechende Abfragealgorithmen kann aus der Datenbank dann ein Tier identifiziert werden, welches den Melkplatz belegte. Eine solche Identifikation kann auch dadurch vereinfacht werden, dass in der Datenbank lediglich die Daten der Tiere bereitgestellt werden, die noch nicht identifiziert worden sind. Dies ist bei kleinen Herden oder in den Fällen zweckmäßig, in denen die Anzahl der noch nicht erfassten Tiere gering ist. Mittels optischer Systeme, beispielsweise Kamerasysteme, Bilderkennungsverfahren od. dgl. kann die Identifikation eines Tieres noch weiter automatisiert werden. Insbesondere kann von jedem sensorisch durch die Erfassungseinrichtung erfassten, aber nicht identifizierten Tier ein Bild aufgenommen werden, das den Informationseinheiten zugeordnet wird um eine nachträgliche Zuordnung zu ermöglichen.

Die Erfassung der einzelnen Tiere erfolgt vorzugsweise, bevor ein Identifikationsvorgang durchgeführt wird. Hierzu wird vorgeschlagen, dass die Erfassungseinrichtung in Richtung auf die Melkplätze hin betrachtet, vor der Identifikationseinrichtung angeordnet ist.

Die Erfassungseinrichtung weist wenigstens einen Sensor auf. Hierbei kann es sich vorzugsweise um optische Sensoren handeln. Unter einem Sensor werden auch komplexe Sensorsysteme verstanden. Vorzugsweise ist die Erfassungseinrichtung durch wenigstens eine Lichtschranke gebildet.

Die Lichtschranke liefert jeweils einen Impuls, wenn ein Tier durch die Erfassungseinrichtung hindurchging. Dieser Impuls oder auch Signal aktiviert einen Zähler. Der Zählerstand entspricht der Ordinalzahl des Tieres, und diese Ordinalzahl wird einem Melkplatz zugeordnet.

Da nicht stets sichergestellt werden kann, dass ein Tier von einer Vorwärtsbewegung in eine Rückwärtsbewegung übergeht, kann eine rückwärts gewandte Bewegung unter Umständen zu Fehlinterpretationen und somit zu einer unzutreffenden Zuordnung des Tieres zu einem Melkplatz führen. Um dies zu vermeiden wird vorgeschlagen, dass wenigstens zwei Erfassungseinrichtungen vorgesehen sind, die in Richtung auf die Melkplätze hin nacheinander angeordnet sind. Aus dem zeitlichen Versatz, der sich aus der Bewegungsgeschwindigkeit des Tieres und dem Abstand der Erfassungseinrichtungen ergibt, kann die Bewegungsrichtung des Tieres ermittelt werden. Der Abstand zwischen den wenigstens zwei Erfassungseinrichtungen sollte dabei ausreichend groß sein.

Bei der Identifikationseinrichtung handelt es sich vorzugsweise um eine Identifikationseinrichtung, die eine Sende- und/oder Empfangseinheit aufweist. Bei der Identifikationseinrichtung kann es sich um die an und für sich bekannten Identifikationseinrichtungen handeln.

Zur Dokumentation der Vorgänge wird nach einer noch weiteren vorteilhaften Ausgestaltung der Vorrichtung vorgeschlagen, dass die Informationseinrichtung wenigstens eine Speichereinheit aufweist.

Insbesondere wird vorgeschlagen, dass die Informationseinrichtung mit einem Herdenmanagement informationstechnisch verbunden ist. Hierdurch kann es zu einem Informationsaustausch zwischen der Informationseinheit und dem Herdenmanagementsystem kommen. So können im Herdenmanagementsystem weitere tierindividuelle Daten hinterlegt werden, die der Informationseinrichtung zur Verfügung gestellt werden. Umgekehrt kann auch die Informationseinrichtung dem Herdenmanagementsystem Informationen übermitteln. Insbesondere werden Informationen über Tiere oder die Gruppe der Tiere, die nicht vollständig identifiziert worden sind, in dem Herdenmanagementsystem hinterlegt. Hierbei kann durch das Herdenmanagementsystem beispielsweise überprüft werden, ob es sich bei den Tieren um Neuzugänge handelt, die noch nicht erfasst worden sind. Es besteht auch die Möglichkeit unter Umständen im Anschluss an einen Melkvorgang die Tiere, die nicht identifiziert worden sind, auszusondern, um diese dann mit den gegebenenfalls notwendigen Tieridentifikationseinrichtungen auszustatten. Gegebenenfalls können defekte Tieridentifikationseinrichtungen wieder instandge- oder ersetzt werden.

Von besonderem Vorteil ist es, wenn die Vorrichtung so ausgebildet ist, dass die Informationseinrichtung mit einer Melkplatzsteuerung informationstechnisch verbunden ist. Dies eröffnet die Möglichkeit bei den Tieren, die nicht identifiziert worden sind, einen Melkvorgang durchzuführen, wobei das Gemelk dieser Tiere vorsorglich separiert wird.

Das erfindungsgemäße Verfahren sowie die erfindungsgemäße Vorrichtung weisen zahlreiche Vorteile auf. Insbesondere wird durch das erfindungsgemäße Verfahren sowie die erfindungsgemäße Vorrichtung erreicht, dass eine eindeutige Zuordnung von Tieren zu Melkplätzen erzielt wird. Darüber hinaus werden Informationen über die Melkplätze bereitgestellt, in denen sich die nicht identifizierten Tiere befinden. Diese Informationen liegen zu einem Zeitpunkt vor, der vor dem Melkvorgang liegt, so dass die Möglichkeit besteht, entsprechende Maßnahmen einzuleiten, ohne dass das Gemelk der nicht identifizierten Tiere möglicherweise zu der verwertbaren Milch gelangt, obwohl dies vermieden werden sollte.

Weitere Einzelheiten und Vorteile der Erfindung werden anhand des in der Zeichnung dargestellten Ausführungsbeispiels erläutert, ohne dass die Erfindung auf den Gegenstand der Zeichnung beschränkt wird.

Es zeigen:
- Fig. 1: schematisch eine Stallanordnung und
- Fig. 2: schematisch eine Vorrichtung zur Bereitstellung von Informationen für die Melkplatzbelegung eines Melksystems.

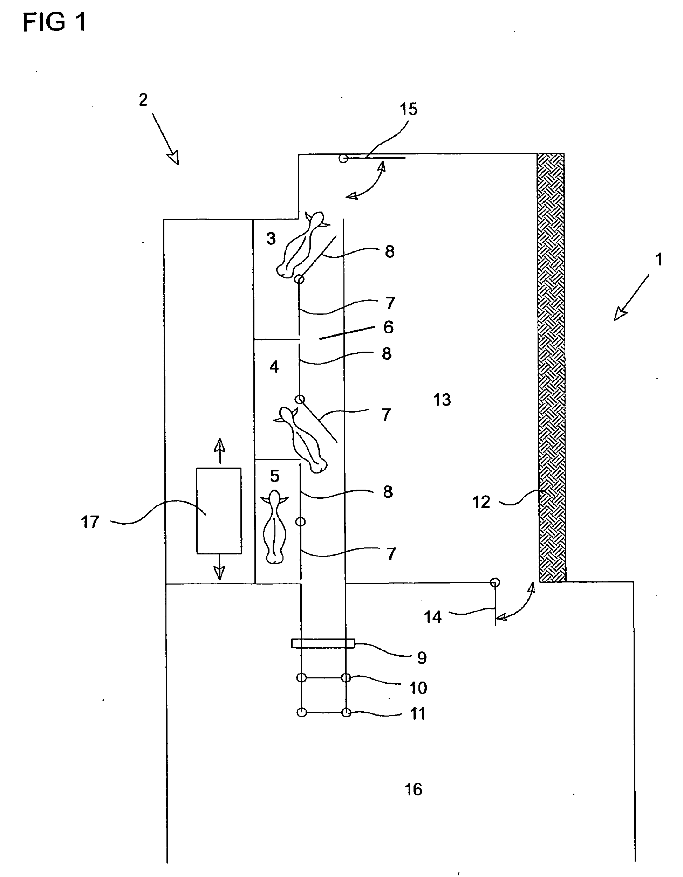

Figur 1 zeigt eine Stallanordnung 1 mit einem Melkraum 2. Der Melkraum 2 weist in Serie angeordnete Melkplätze 3, 4, 5 auf. Die Melkplätze 3, 4, 5 sind von einem parallel zu den Melkplätzen verlaufenden Laufgang 6 erreichbar. Jeder Melkplatz 3, 4, 5 weist ein Einlassgatter 7 und ein Auslassgatter 8 auf. Der Laufgang 6 ist so bemessen, dass aufeinanderfolgende Tiere sich nicht überholen können. Des weiteren sind der Laufgang 6 und die Einlassgatter 7 so bemessen, dass im geöffneten Zustand des Einlassgatters 7, der Laufgang 6 einem Tier versperrt wird, so dass ein Tier zwangsweise zu einem Melkplatz geleitet wird. Diese Situation ist am Melkplatz 4 dargestellt Andererseits ist das Auslassgatter 8 so ausgebildet, dass in einer geöffneten Stellung, in der ein Tier einen Melkplatz verlassen kann, das Tier nur einen vorgegebenen Weg beschreiten kann.

Am Einlass des Laufgangs 6 ist eine Identifikationseinrichtung 9 angeordnet. Mittels der Identifikationseinrichtung 9 werden die einzelnen Tiere, die im Laufgang 6 in Richtung der Melkplätze gehen, jeweils einem Identifikationsvorgang unterzogen. Die Identifikationseinrichtung 9 arbeitet vorzugsweise berühungslos. Sie weist insbesondere eine Sende- und/oder Empfangseinheit auf. Mittels der Identifikationseinrichtung 9 werden die von den Tieren getragenen Tieridentifikationsmittel, in denen tierindividuelle Kenngrößen bzw. Daten hinterlegt sind, ausgelesen.

In Richtung auf die Melkplätze hin betrachtet sind der Identifikationseinrichtung 9 zwei Erkennungseinrichtungen 10, 11 vorgeordnet. Die Erkennungseinrichtungen 10, 11 sind mit Abstand zueinander angeordnet. Sie weisen vorzugsweise Sensoren auf, die sich die im Laufgang 6 und in Richtung der Melkplätze bewegende Tiere erfassen. Die Erkennungseinrichtungen 10, 11 weisen vorzugsweise Lichtschranken auf. Durch die Erkennungseinrichtungen 10, 11 werden die Tiere erfasst und ihnen wird jeweils beispielsweise eine Ordinalzahl zugeordnet. Diese Ordinalzahl wird gemeinsam mit den durch den Identifikationsvorgang gewonnenen Daten einer Informationseinheit zugeordnet. Da bekannt ist, zu welchem Melkplatz ein Tier gelangt, wird wenigstens diesem Melkplatz die Informationseinheit zur Verfügung gestellt.

Nach erfolgtem Melkvorgang verlassen die Tiere bzw. das Tier den Melkraum 2 und gelangt zu den Fressständen 12. Hierzu wird ein Tor 15 am Ende des Laufgangs 6 geöffnet. Die Tiere, die sich in dem Fressstandbereich 13 befinden, können diesen über ein Gatter 14, welches automatisch geöffnet und geschlossen wird, verlassen, um beispielsweise zum Liegebereich 16 zurückzugelangen.

Parallel zu den Melkplätzen 3, 4, 5 ist wenigstens ein Melkroboter 17 angeordnet. In dem dargestellten Ausführungsbeispiel ist der Melkroboter 17 in Längsrichtung der Melkplätze 3, 4, 5 verfahrbar.

Die vorstehend beschriebene Anordnung ist grundsätzlich nicht nur auf Melkroboter gestützte Systeme übertragbar. Die Identifikationseinrichtung sowie die Erkennungseinrichtung sowie deren funktionales Zusammenwirken kann auch bei konventionellen Melksystemen sowie bei halbautomatischen Melksystemen verwirklicht werden. Es besteht auch die Möglichkeit, dass der erfinderische Gedanke auch auf Karussell-Melkanlagen oder andere Melkanlagen mit, anderen beweglichen Transporteinrichtungen übertragbar ist. Die Anordnung der Melkplätze kann bei einem Melksystem beliebig gewählt werden. Hierbei kann es sich beispielsweise auch um eine Side-by-Side Melkanlage handeln.

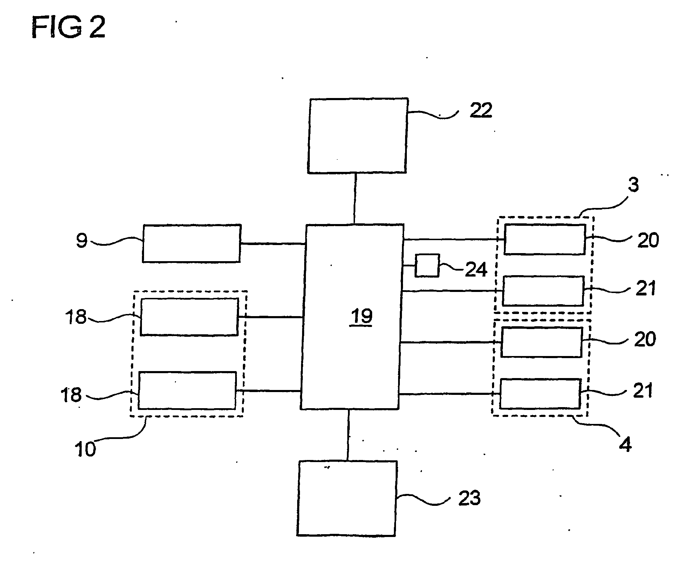

Figur 2 zeigt schematisch und prinzipiell eine Vorrichtung zur Bereitstellung von Informationen über Melkplatzbelegung eines Melksystems. Die Vorrichtung weist eine Identifikationseinrichtung 9 und eine Erfassungseinrichtung 10 auf. Die Erfassungseinrichtung 10 ist in dem dargestellten Ausführungsbeispiel durch zwei Lichtschranken 18 gebildet. Die Identifikationseinrichtung 9 und die Erfassungseinrichtung 10 sind informationstechnisch mit einer Informationseinrichtung 19 verbunden.

Die Identifikationseinrichtung 9 liefert Signale an die Informationseinrichtung 19, wobei der Bedeutungsinhalt der Signale davon abhängig ist, ob ein Identifikationsvorgang erfolgreich oder nicht erfolgreich durchgeführt wurde. Ist der Identifikationsvorgang eines Tieres erfolgreich durchgeführt worden, so übermittelt die Identifikationseinrichtung 9 die zu einem Tier zugehörigen tierindividuellen Größen bzw. Daten an die Informationseinrichtung 19. Ist ein Identifikationsvorgang gescheitert, was beispielsweise dadurch eintreten kann, dass ein Tier keine Tieridentifikationsmittel aufweist, so wird ein entsprechendes Signal an die Informationseinrichtung 19 übermittelt. Weiter ist möglich, dass in diesem Fall kein Signal von der Identifikationseinrichtung an die Informationseinrichtung übermittelt wird.

Bevor ein Identifikationsvorgang in der Identifikationseinrichtung 9 stattfindet, findet eine Erfassung des Tieres in der Erfassungseinrichtung 10 statt. Die Erfassung des Tieres erfolgt in dem dargestellten Ausführungsbeispiel mittels der Lichtschranken 18. Dem Signal der Erfassungseinrichtung werden die von der Identifikationseinrichtung 9 gelieferten Signale zugeordnet, so dass zu jedem Tier eine Informationseinheit gebildet wird.

Die Informationseinrichtung 19 ist ggf. über ein Herdenmanagementsystem und beispielsweise Melksteuergeräte mit einem Melkplatz 3 verbunden. An dem Melkplatz 3 sind optische und akustische Ausgabeeinheiten 20, 21 angeordnet. Die akustischen und optischen Ausgabeeinheiten 20, 21 können auch in einer Baueinheit zusammengefasst und insbesondere vorhandene Geräte inkorporiert werden.

Aus der Darstellung in der Figur 2 ist des weiteren erkennbar, dass die Informationseinrichtung 19 mit einem Herdenmanagementsystem 22 verbunden ist. Zwischen der Informationseinrichtung 19 und dem Herdenmanagementsystem 22 kann ein Austausch an Informationen stattfinden. So kann beispielsweise die Informationseinrichtung 19 von dem Herdenmanagementsystem 22 weitere Daten von Tieren abfragen, die identifiziert worden sind. Umgekehrt kann auch die Informationseinrichtung 19 Daten der identifizierten bzw. nicht identifizierten Tiere an das Herdenmanagementsystem 22 liefern.

Zur Protokollierung der Melkplatzzuordnungen ist die Informationseinrichtung 19 mit einer Protokolliereinheit 23 verbunden. Die Protokollierung kann innerhalb des Herdenmanagementsystems erfolgen. Das Protokoll kann beispielsweise in Form eines Papierausdrucks oder auf dem Bildschirm ausgegeben werden.

Die Informationseinrichtung 19 kann auch mit einer Melkplatzsteuereinrichtung 24 verbunden sein. In Abhängigkeit von dem Informationsgehalt der durch die Informationseinrichtung 19 bereitgestellten Informationseinheiten kann die Melkplatzsteuerung 24 unterschiedliche Steuervorgänge auslösen. Hierbei kann es sich beispielsweise um eine Abscheidung der ermolkenen Milch handeln, wenn aus dem Informationsinhalt der Informationseinheit hervorgeht, dass das zu melkende Tier nicht eindeutig identifiziert wurde. Es besteht auch die Möglichkeit, dass beispielsweise am Melkstand eine nicht dargestellte Markierungseinrichtung vorgesehen ist, durch die das nicht identifizierte Tier markiert wird. Die Markierung kann in Form beispielsweise von Farbmarkierungen oder anderen Markierungsmitteln erfolgen, so dass das Tier für eine Bedienperson leichter aus einer Herde absonderbar ist, wenn dieses Tier mit einem Tieridentifikationsmittel versehen werden soll. Die Melkplatzsteuerung kann auch so ausgestaltet sein, dass das nicht identifizierte Tier in einen Separationsbereich geführt wird, um dort mit einer Tiererkennungseinrichtung versehen zu werden.

Durch die erfindungsgemäße Ausgestaltung des Verfahrens sowie der Vorrichtung wird erreicht, dass im Vorfeld eines Melkvorgangs eine eindeutige Zuordnung von Tieren zu Melkplätzen erreicht wird.

### Bezugszeichenliste

- 1: Stallanordnung
- 2: Melkraum
- 3, 4, 5: Melkplatz
- 6: Laufgang
- 7: Einlassgatter
- 8: Auslassgatter
- 9: Identifikationseinrichtung
- 10, 11: Erkennungseinrichtung
- 12: Fressstand
- 13: Fressstandbereich
- 14: Gatter
- 15: Tor
- 16: Liegebereich
- 17: Melkroboter
- 18: Lichtschranke
- 19: Informationseinrichtung
- 20: Akustische Ausgabeeinheit
- 21: Optische Ausgabeeinheit
- 22: Herdenmanagementsystem
- 23: Protokolliereinheit
- 24: Melkstandsteuerung

## Patentansprüche

1. Verfahren zur Bereitstellung von Informationen über die Melkplatzbelegung eines Melksystems, bei dem zur Bildung platzbezogener Informationseinheiten die Tiere einzeln aufeinanderfolgend sensorisch erfasst und Identifikationsvorgängen unterzogen werden, wobei die sensorische Erfassung und die Identifikationsvorgänge so aufeinander abgestimmt sind, dass Informationseinheiten die jeweiligen sensorisch erfassten Daten und die durch die Identifikationsvorgänge ermittelten Daten zugeordnet werden.

2. Verfahren nach Anspruch 1, bei dem die Erfassung im wesentlichen vor der Identifikation erfolgt.

3. Verfahren nach Anspruch 1 oder 2, bei dem die Erfassung durch Sensoren, insbesondere wenigstens eine Lichtschranke oder ein Kamerasystem, einen Näherungssensor oder einen Infrarotsensor erfolgt.

4. Verfahren nach Anspruch 1, 2 oder 3, bei dem die Tiere durch einen Identifikationsbereich hindurch geführt werden.

5. Verfahren nach einem oder mehreren vorhergehenden Ansprüchen, bei dem tierindividuelle Informationen aus Tieridentifiziermitteln, die eine Tier aufweist, durch eine Identifikationseinrichtung herausgelesen werden.

6. Verfahren nach einem der Ansprüche 1 bis 5, bei dem die Identifikation berührungslos, vorzugsweise mittels RF-Technik erfolgt.

7. Verfahren nach einem oder mehreren vorhergehenden Ansprüchen 1 bis 6, bei dem an den Melkplätzen, an denen Tiere vorhanden sind, die nicht eindeutig identifiziert wurden, wenigstens ein Signal, insbesondere ein optisches und/oder ein akustisches Signal ausgelöst wird.

8. Vorrichtung zur Bereitstellung von Informationen über Melkplatzbelegung eines Melksystems, mit wenigstens einer Identifikationseinrichtung (9), durch die jedes Tier einem Identifikationsvorgang unterzogen wird, **dadurch gekennzeichnet, dass** jeder Identifikationseinrichtung (9) mindestens eine Erfassungseinrichtung (10) mit wenigstens einem Sensor (18), die zur Erfassung eines jeden Tieres bestimmt ist, zugeordnet ist, wobei eine Informationseinrichtung (19) mit der Identifikationseinrichtung (9) und der Erfassungseinrichtung (10) informationstechnisch verbunden ist, so dass die Informationseinrichtung (19) einzelne Informationseinheiten wenigstens an den Melkplätzen (3, 4, 5) zur Verfügung stellt in denen sich die zu den Informationseinheiten zugehörigen Tiere befinden.

9. Vorrichtung nach Anspruch 8, **dadurch gekennzeichnet, dass** die Erfassungseinrichtung (10, 11) in Richtung auf die Melkplätze (3, 4, 5) hin betrachtet vor der Identifikationseinrichtung (9) angeordnet ist.

10. Vorrichtung nach Anspruch 8 oder 9, **dadurch gekennzeichnet, dass** die Erfassungseinrichtung (10, 11) wenigstens einen Sensor, insbesondere einen optischen Sensor (18), vorzugsweise wenigstens eine Lichtschranke oder ein Kamerasystem, und/oder einen Näherungssensor aufweist.

11. Vorrichtung nach Anspruch 8, 9 oder 10, **dadurch gekennzeichnet, dass** wenigstens zwei Erfassungseinrichtungen (10, 11) vorgesehen sind, die in Richtung auf die Melkplätze (3, 4, 5) hin, nacheinander anordnet sind.

12. Vorrichtung nach einem oder mehreren vorhergehenden Ansprüchen 8 bis 11, **dadurch gekennzeichnet, dass** Identifikationseinrichtung (9) wenigstens eine Sende- und/oder Empfangseinheit aufweist.

13. Vorrichtung nach einem der Ansprüche 8 bis 12, **dadurch gekennzeichnet, dass** die Informationseinrichtung (19) wenigstens eine Ausgabeeinheit (20, 21), vorzugsweise eine optische und/oder akustische Ausgabeeinheit aufweist.

14. Vorrichtung nach einem der Ansprüche 8 bis 13, **dadurch gekennzeichnet, dass** die Informationseinrichtung (19) wenigstens eine Speichereinheit aufweist.

15. Vorrichtung nach einem oder mehreren vorhergehenden Ansprüchen 8 bis 14, **dadurch gekennzeichnet, dass** die Informationseinrichtung (19) mit einem Herdenmanagementsystem (22) informationstechnisch verbunden ist.

16. Vorrichtung nach wenigstens einem der Ansprüchen 8 bis 14, **dadurch gekennzeichnet, dass** die Informationseinrichtung (19) mit einer Melkplatzsteuerung (24) informationstechnisch verbunden ist.

## Claims

1. Method for providing information about the occupancy of a milking system in which, in order to produce station-related information units, the animals are detected by sensors in sequence individually and are subjected to identification processes, whereby the sensor detection and the identification processes are adjusted to one another in such a way that information units are assigned the particular data detected by sensors that were obtained by the identification processes.

2. Method according to Claim 1, in which the detection occurs essentially before the identification.

3. Method according to Claim 1 or 2, in which the detection occurs with sensors, particularly at least a photoelectric barrier or a camera system, an approach sensor or an infrared sensor.

4. Method according to Claim 1, 2 or 3, in which the animals are led through an identification area.

5. Method according to one or more of the previous claims, in which individual information on animals is read by an identification device from an animal identification means which is carried by an animal.

6. Method according to one of Claims 1 to 5, in which the identification is done without contact, preferably by RF technology.

7. Method according to one or several of the previous Claims 1 to 6, in which, at the milking stations at which animals are present that have not been unequivocally identified, at least one signal is triggered, especially an optical and/or an acoustical signal.

8. Device for providing information about the occupancy of milking stations of a milking system, with at least one identification device (9), by which each animal is subjected to an identification process, **characterized by** the fact that each identification device (9) is assigned at least one detection device (10) with at least one sensor (18) which is intended for the detection of each animal, whereby an information device (19) is connected to the identification device (9) and the detection device (10) using information technology, so that the information device (19) makes available individual information units at least to those milking stations (3, 4, 5) in which the animals corresponding to the information units are located.

9. Device according to Claim 8, **characterized by** the fact that the detection device (10, 11) is arranged to point towards the milking station (3, 4, 5) in front of the identification device (9).

10. Device according to Claim 8 or 9, **characterized by** the fact that the detection device (10, 11) has at least one sensor, especially an optical sensor (18), preferably at least a photoelectric barrier or a camera system and/or an approach sensor.

11. Device according to Claim 8, 9 or 10, **characterized by** the fact that at least two detection devices (10, 11) are provided which are arranged one after the other in the direction of the milking stations (3, 4, 5).

12. Device according to one or several of the previous Claims 8 to 11, **characterized by** the fact that the identification device (9) has at least one transmitting and/or receiving unit.

13. Device according to one of Claims 8 to 12, **characterized by** the fact that the information device (19) has at least one output unit (20, 21), preferably an optical and/or acoustical output unit.

14. Device according to one of Claims 8 to 13, **characterized by** the fact that the information device (19) has at least one memory unit.

15. Device according to one or several of previous Claims 8 to 14, **characterized by** the fact that the information device (19) is connected to a herd management system (22) using information technology.

16. Device according to at least one of Claims 8 to 14, **characterized by** the fact that the information device (19) is connected to a milking station control (24) using information technology.

## Revendications

1. Procédé pour fournir des informations sur l'occupation des postes de traite d'un système de traite, selon lequel les animaux sont individuellement et successivement détectés par des capteurs et soumis à des processus d'identification en vue de former des unités d'information en rapport avec le poste, la détection par capteurs et les processus d'identification étant accordés les uns aux autres de telle sorte que les unités d'information sont associées aux données respectivement détectées par des capteurs et aux données déterminées par les processus d'identification.

2. Procédé selon la revendication 1, selon lequel la détection s'effectue pour l'essentiel avant l'identification.

3. Procédé selon la revendication 1 ou 2, selon lequel la détection est réalisée par des capteurs, notamment par au moins une barrière photoélectrique ou un système à caméra, un détecteur de proximité ou un détecteur à infrarouges.

4. Procédé selon la revendication 1, 2 ou 3, selon lequel les animaux passent à travers une zone d'identification.

5. Procédé selon une ou plusieurs des revendications précédentes, selon lequel les informations individuelles sur les animaux sont lues par un dispositif d'identification à partir de moyens d'identification d'animal que porte un animal.

6. Procédé selon l'une des revendications 1 à 5, selon lequel l'identification s'effectue sans contact, de préférence au moyen d'une technique HF.

7. Procédé selon une ou plusieurs des revendications 1 à 6, selon lequel au moins un signal, notamment un signal visuel et/ou sonore est déclenché aux postes de traite où se trouvent des animaux qui n'ont pas été parfaitement identifiés.

8. Dispositif pour fournir des informations sur l'occupation des postes de traite d'un système de traite, comprenant au moins un dispositif d'identification (9) par lequel chaque animal est soumis à un processus d'identification, **caractérisé en ce qu'**à chaque dispositif d'identification (9) est associé au moins un dispositif de détection (10) comprenant au moins un capteur (18) qui est conçu pour détecter chaque animal, un dispositif d'information (19) étant relié de manière informatique avec le dispositif d'identification (9) et le dispositif de détection (10) de telle sorte que le dispositif d'information (19) se voit délivrer des unités d'information individuelles au moins aux postes de traite (3, 4, 5) auxquels se trouvent les animaux associés aux unités d'information.

9. Dispositif selon la revendication 8, **caractérisé en ce que** le dispositif de détection (10, 11), vu en direction des postes de traite (3, 4, 5), est disposé avant le dispositif d'identification (9).

10. Dispositif selon la revendication 8 ou 9, **caractérisé en ce que** le dispositif de détection (10, 11) présente au moins un capteur, notamment un capteur optique (18), de préférence au moins une barrière photoélectrique ou un système à caméra et/ou un détecteur de proximité.

11. Dispositif selon la revendication 8, 9 ou 10, **caractérisé en ce qu'**au moins deux dispositifs de détection (10, 11) sont prévus, lesquels sont disposés l'un derrière l'autre en direction des postes de traite (3,4,5).

12. Dispositif selon une ou plusieurs des revendications précédentes 8 à 11, **caractérisé en ce que** le dispositif d'identification (9) présente au moins une unité d'émission et/ou de réception.

13. Dispositif selon l'une des revendications 8 à 12, **caractérisé en ce que** le dispositif d'information (19) présente au moins une unité de sortie (20, 21), de préférence une unité de sortie visuelle et/ou sonore.

14. Dispositif selon l'une des revendications 8 à 13, **caractérisé en ce que** le dispositif d'information (19) présente au moins une unité de mémorisation.

15. Dispositif selon l'une ou plusieurs des revendications précédentes 8 à 14, **caractérisé en ce que** le dispositif d'information (19) est relié de manière informatique avec un système de gestion de troupeau (22).

16. Dispositif selon au moins une des revendications 8 à 14, **caractérisé en ce que** le dispositif d'information (19) est relié de manière informatique avec une commande de poste de traite (24).
